# EUROPEAN PATENT APPLICATION

(11) **EP 2 648 438 A1**
(43) Date of publication of application: **09.10.2013**
(21) Application number: 12198236.7
(22) Date of filing: 19.12.2012
(51) Int. Cl.: H04W 12/08, H04L 29/06, H04W 8/00, H04M 1/725

(54) **Terminal coordination system and method therefor**

(30) Priority: 04.04.2012 JP 2012085124
(71) Applicant: Hitachi Ltd., Tokyo (JP)
(72) Inventor: Umezawa, Katsuyuki, Chiyoda-ku, Tokyo 100-8220, (JP); Isokawa, Hiromi, Chiyoda-ku, Tokyo 100-8220, (JP); Fukushima, Shinichiro, Chiyoda-ku, Tokyo 100-8220, (JP)
(74) Representative: Calderbank, Thomas Roger

(57) **Abstract**

There is a strong demand for a technique that enable plural terminal devices (101, 102, ..., 10n) to be easily paired with plural mobile terminal units (201, 202, ..., 20m) possessed by their respective users in a room where the terminal devices that can be shared among the users are installed. Each terminal device searches for mobile terminals present within the wireless range. If the plural mobile terminal units are present within a searchable area, the search result indicates plural mobile terminal units, making it difficult to determine with what mobile terminal unit should the terminal device be paired. The current states of various sensors of the mobile terminal units are included in information indicating the names of the mobile terminal units and are searched by the terminal device. Under circumstances where the plural terminal devices (101, 102, ..., 10n) and the plural mobile terminal units (201, 202, ..., 20m) exist within short distances, the mobile terminal unit to be paired with the terminal device can be found with ease. Subsequently, the start of use of the terminal device is facilitated.

## Description

The disclosed subject matter relates to a terminal coordination system for coordinating terminal devices and mobile terminal units.

In recent years, various devices and appliances have had networking functions, and there are an increasing number of devices which are coordinated and receive services. For example, Bluetooth (registered trademark) devices are coordinated. A terminal device and a Wi-Fi router are coupled together. Game machines are coordinated. Where terminal devices are coordinated, it is necessary to form pairs of terminal devices. An operation for causing terminal devices to recognize each other and to share a key used for communications is hereinafter referred to as pairing.

A method used by a mobile terminal unit (hereinafter referred to as the subject mobile terminal) to make other terminal devices recognize the subject mobile terminal is known, for example, as disclosed in JP-A-2008-311889 (especially, its claim 1). In particular, the subject mobile terminal is shaken to emit a signal in order to urge other terminals (wireless base stations) to recognize the subject mobile terminal. If there are plural mobile terminal units emitting signals, a priority is given to a mobile terminal unit first approaching the subject mobile terminal within a predetermined distance. Furthermore, there is a known method of identifying a communicating party by placing one mobile terminal unit on top of another and shaking them simultaneously as disclosed, for example, in JP-A-2010-21810 (especially, its claim 1).

Under circumstances where there are plural users each possessing a mobile terminal unit in a room in which there are mounted plural terminal devices capable of being shared by the users, there is a strong demand for a technique of easily pairing the mounted terminal devices with the mobile terminal units possessed by the users.

The above-cited JP-A-2008-311889 discloses a method of coupling plural mobile terminal units with one system. The above-cited JP-A-2010-21810 discloses a method of pairing mobile units that can be shaken together.

In the conventional art, terminal equipment searches a range that can be wirelessly covered for any mobile terminal unit. If there are plural mobile terminal units within the searched range, the search will produce results indicating plural units. Thus, it is not easy to choose which one of the mobile terminal units is paired with the searching equipment.

In the conventional art, any method of easily pairing plural terminal devices with plural mobile terminal units is not disclosed.

In view of the foregoing circumstances, the present disclosure has been made. There is herein disclosed a technique used by terminal equipment to search for mobile terminal units in such a way that the current states of various sensors of the mobile terminal units can be known and that information about these current states is included in information indicative of the names of the mobile terminal units.

One of the aspects disclosed herein is a terminal coordination system for pairing one terminal device with one mobile terminal unit from plural terminal devices and plural mobile terminal units and sending and receiving data between the paired terminal device and mobile terminal unit. In this terminal coordination system, the terminal device and the mobile terminal unit are paired together such that a key is shared between these device and unit. Using the shared key, a login to the OS (Operating System) of the terminal device is performed. Then, the terminal device and the mobile terminal unit are decoupled from each other. A logout from the OS of the terminal device is performed. One terminal device and one mobile terminal unit which were paired together at least once are recoupled together. In a case where data is sent and received between one terminal device and one mobile terminal unit which were once paired together, the terminal device and mobile terminal unit are then coupled together and the terminal device logs out of the OS using the shared key employed for the pairing. Where the record of the pairing between the terminal device and the mobile terminal unit which were once paired together is erased, the shared key is discarded.

More specifically, the terminal coordination system performs a pairing process. During this process, a first terminal device sends a search request to plural mobile terminal units. Each mobile terminal unit receiving the search request performs an operation for obtaining sensor information, and sends information about the unit itself and the sensor information to the first terminal device. The first terminal device displays the mobile terminal information and sensor information about plural mobile terminal units. A selection performed by a user regarding a mobile terminal unit in response to the displayed information is accepted. If such a selection is not performed, the process returns to the aforementioned operation for searching for mobile terminal units. If the selection is done, pairing with the selected mobile terminal unit is done. A pairing request is sent to the selected mobile terminal unit. The selected mobile terminal unit performs a pairing operation in response to the received pairing request. Information about the created pair is stored in the mobile terminal unit itself. Information about the created pair is sent back to the first terminal device. The first terminal device stores the sent information about the pair. The first terminal device and the selected mobile terminal unit may be configured to send and receive data to and from each other.

Furthermore, the terminal coordination system performs an operation for recoupling the first terminal device and the mobile terminal unit which were paired together at least once. During this operation, the first terminal device displays sensor request information. The mobile terminal unit obtains sensor information in response to a user's manipulation and according to the sensor request information displayed on the first terminal device. Information about the terminal unit itself and the sensor information is sent to the first terminal device. The first terminal device compares the displayed sensor request information with the sensor information received from the mobile terminal unit. If the result of the comparison indicates that there is no coincidence, the process is repeated from the operation for displaying the sensor request information. If the result of the comparison indicates that there is a coincidence, the stored information about the pair is acquired, and the communicating party to be coupled is determined as a mobile terminal unit. A coupling request is sent to the mobile terminal unit, which in turn obtains stored information about the pair and sends a coupling response to the first terminal device. The first terminal device and the mobile terminal unit may be so configured that data is sent and received between them.

In addition, the terminal coordination system may further include server equipment coupled via a network. In an operation for storing the information about the pair, each of the first terminal device and the mobile terminal unit may send information about the pairing of the device or unit itself to the server equipment. In an operation for obtaining information about the pairing, information about the pairing of the device or unit itself may be obtained from the server equipment.

In the terminal coordination system, the terminal device may be so configured that it has a communication portion for sending and receiving data to and from a mobile terminal unit via wireless communications, a display portion for displaying information about the mobile terminal unit searched for, a pairing operation portion for pairing this terminal device with the mobile terminal unit such that a key is shared between them, a coupling operation portion for performing recoupling using the shared key after the pairing, and a pairing information storage portion for storing information about the pair used by both pairing operation portion and coupling operation portion. The mobile terminal unit may be so configured that it has a communication portion for sending and receiving data to and from the terminal device via wireless communications, a pairing operation portion for paring the mobile terminal unit with the terminal device, a coupling operation portion for performing recoupling using the shared key after the pairing, a pairing information storage portion for storing information about pairing used by both the pairing operation portion and the coupling operation portion, and a sensor processing portion for obtaining sensor information from a sensor device.

The server equipment of the terminal coordination system may be so configured as to have a communication portion for performing communications with the terminal device and with the mobile terminal unit via a network, a pairing information storage portion for receiving pairing information created by pairing of the terminal device and the mobile terminal unit from these device and unit and storing the received information, and a pairing information delivery portion for obtaining the stored pairing information according to a request from the terminal device and mobile terminal unit and sending the pairing information to the terminal device and mobile terminal unit.

According to the disclosure, even under circumstances where plural terminal devices and plural mobile terminal units are present close to each other, the terminal devices can be easily paired with the mobile terminal units.

The details of one or more implementations of the subject matter described in the specification are set forth in the accompanying drawings and the description below. Other features, aspects, and advantages of the subject matter will become apparent from the following description provided in relation to the accompanying drawings, and the claims.

In the drawings:
FIG. 1 is a diagram exemplifying configurations of terminal devices and mobile terminal units of a terminal coordination system.
FIG. 2 is a block diagram exemplifying the configuration of a terminal coordination system of embodiment 1.
FIG. 3 is a block diagram exemplifying the hardware configurations of terminal devices, mobile terminal units, and server equipment.
FIG. 4 is a flowchart exemplifying the whole sequence of processing performed by the terminal coordination system.
FIG. 5 is a flowchart exemplifying a sequence of operations performed to search for a single mobile terminal unit during (an initial) pairing operation.
FIG. 6 is a flowchart exemplifying a sequence of operations performed to search for plural mobile terminal units during (an initial) pairing operation.
FIG. 7 is a flowchart exemplifying a sequence of operations performed to search for a single mobile terminal unit when recoupling is done.
FIG. 8 is a flowchart exemplifying a sequence of operations performed to search for plural mobile terminal units when recoupling is done.
FIG. 9A is a perspective view exemplifying a display of sensor request information.
FIG. 9B is a perspective view exemplifying another display of sensor request information.
FIG. 10 exemplifies a data structure of sensor information (paring information).
FIG. 11 exemplifies the display screen of a mobile terminal unit on which the results of a search are shown.
FIG. 12 is a block diagram exemplifying the configuration of a terminal coordination system of embodiment 2.

### [Embodiment 1]

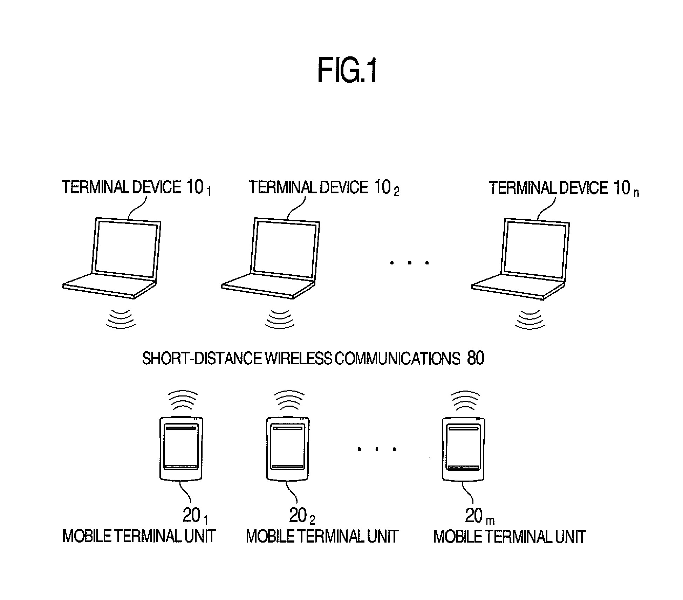

FIG. 1 exemplifies terminal devices and mobile terminal units of a terminal coordination system. As shown in FIG. 1, in the terminal coordination system of the present embodiment, the plural terminal devices 10 (such as 10₁, 10₂, ..., 10ₙ) and the plural mobile terminal units 20 (such as 20₁, 20₂, ..., 20ₘ) are coupled together via short-distance wireless communications 80. Data is sent and received as described below by paring one terminal device such as 10ₙ and one mobile terminal unit such as 20ₘ with each other out of the plural terminal devices 10 and the plural mobile terminal units 20.

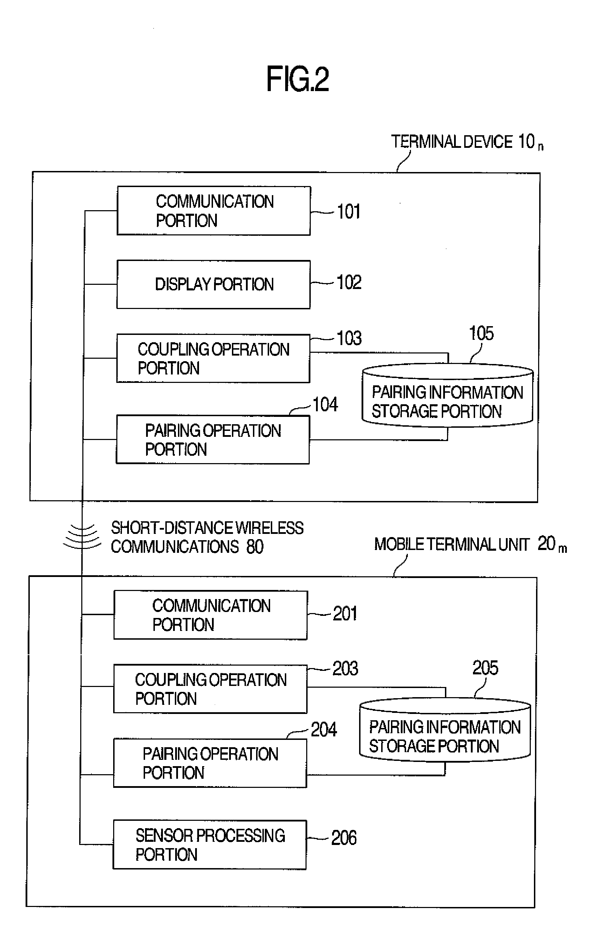

FIG. 2 is a block diagram of the terminal coordination system of the present embodiment. As shown in FIG. 2, in the terminal coordination system of the present embodiment, the terminal device 10ₙ and the mobile terminal unit 20ₘ are coupled to each other via the short-distance wireless communications 80.

The terminal device 10ₙ includes a communication portion 101 for sending and receiving data to and from the mobile terminal unit 20ₘ via the short-distance wireless communications 80, a display portion 102 for displaying information about the mobile terminal units 20 searched for, a pairing operation portion 104 for paring this terminal device 10ₙ with the mobile terminal unit 20ₘ and sharing a key used when data is sent and received, a coupling operation portion 103 for performing recoupling using the already shared key after the device and unit have been paired together, and a pairing information storage portion 105 for storing pair information (such as the address of the communicating party and shared key) used by both pairing operation portion 104 and coupling operation portion 103.

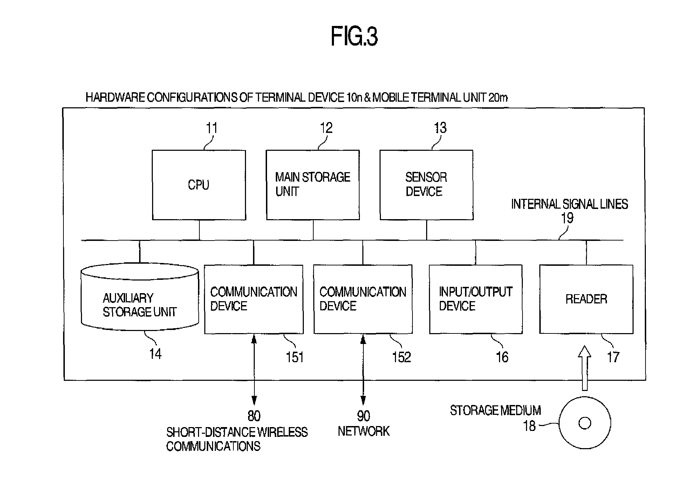

The mobile terminal unit 20ₘ includes a communication portion 201 for sending and receiving data to and from the terminal device 10ₙ via the short-distance wireless communications 80, a pairing operation portion 204 for pairing this mobile terminal unit 20ₘ with the terminal device 10ₙ, a coupling operation portion 203 for performing recoupling using the key already shared after the pairing operation, a pairing information storage portion 205 for storing pairing information (such as the address of the communicating party and shared key) used by both pairing operation portion 204 and coupling operation portion 203, and a sensor processing portion 206 for obtaining sensor information from a sensor device 13 (see FIG. 3) and converting this information into sensor information of which a notice is given to the terminal device 10ₙ.

FIG. 3 shows the hardware configuration of the mobile terminal unit 20ₘ. In this configuration, a CPU 11, a main storage unit 12, the aforementioned sensor device 13, an auxiliary storage unit 14, a communication device 151 for performing the short-distance wireless communications 80, another communication device 152 coupled to a network 90, an input/output device 16, and a reader 17 for a storage medium 18. These components are interconnected by internal communication lines 19 such as buses.

A server equipment 30 may be coupled to the network 90. The terminal devices 10 and the server equipment 30 are similar in hardware configuration to the mobile terminal units 20 except for size and performance in an unillustrated manner. The terminal devices 10 and the server equipment 30 are dispensed with the sensor device 13.

The coordinating operations of the present embodiment are described. A computer program stored in the auxiliary storage unit 14 of each device or unit is loaded into the main storage unit 12 and executed by the CPU, whereby operations of the various components are carried out. Programs may be previously stored in the auxiliary storage unit 14 or loaded as the need arises via other storage medium or communication medium (such as a network or carrier wave or digital signal conveyed along the network).

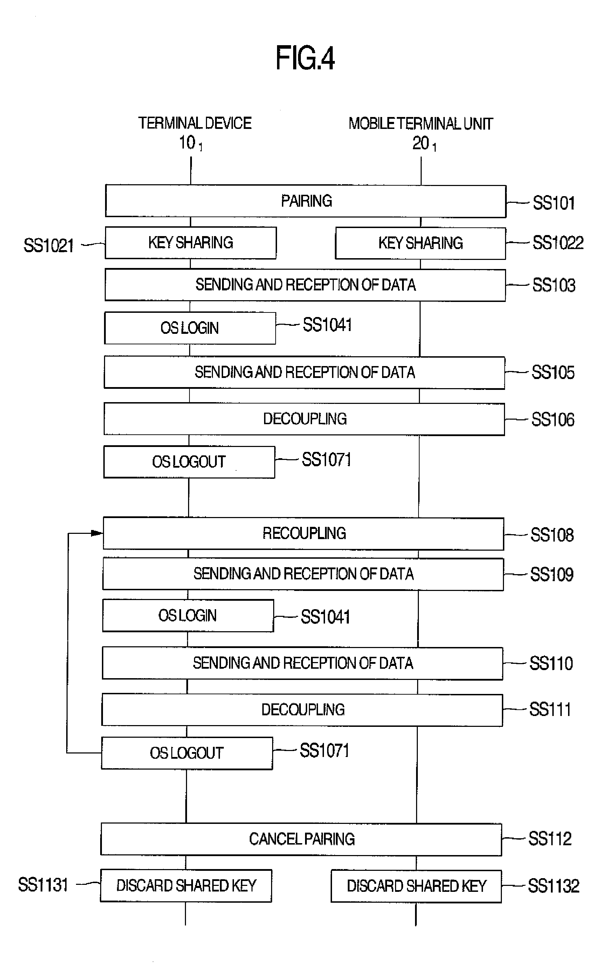

FIG. 4 is a flowchart of the whole sequence of operations performed by the terminal coordination system.

First, the terminal device 10₁ and the mobile terminal unit 20₁ are paired together (SS101). As the result of the pairing, a shared key is created and shared (SS1021 and SS1022). Then, information for a login to the OS of the terminal device 10₁ is sent from the mobile terminal unit 20₁ to the terminal device 10₁ using the shared key (SS103). A login to the OS of the terminal device 10₁ is carried out (SS1041). Subsequently, arbitrary data is sent or received (SS105). Then, the terminal device 10₁ and the mobile terminal unit 20₁ are decoupled (SS106). Under this condition, a logout from the OS of the terminal device 10₁ is performed (SS1071).

In the case of a combination of the terminal device 10₁ and the mobile terminal unit 20₁ which were once paired together, recoupling is then performed (SS108). Then, information about a login to the OS of the terminal device 10₁ is sent from the mobile terminal unit 20₁ to the terminal device 10₁ using the key shared by the key sharing operations (SS1021 and SS1022) (SS109). A login to the OS of the terminal device 10₁ is performed (SS1041). Then, arbitrary data is sent and received (SS110). Thereafter, the terminal device 10₁ and the mobile terminal unit 20₁ are decoupled (SS111). Then, a logout from the OS of the terminal device 10₁ is performed (SS1071).

Where the record of the pairing between the terminal device 10₁ and mobile terminal unit 20₁ which were once paired together should be erased, a pairing cancel operation is performed (SS112) and the shared key is discarded (SS1131 and SS1132).

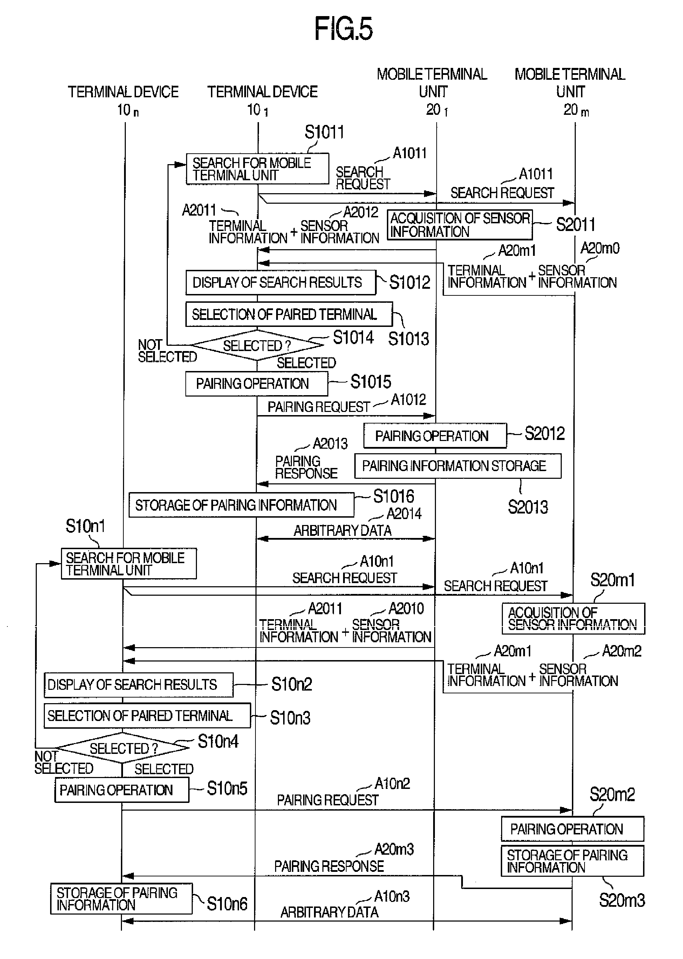

FIG. 5 is a flowchart illustrating a sequence of operations performed to pair plural terminal devices 10 with plural mobile terminal units 20. In particular, the flowchart of FIG. 5 illustrates operations when a single mobile terminal unit 20 responds to a search request from any one of the terminal devices 10 when a pairing operation is performed.

First, a terminal device 10₁ makes a search request to search for mobile terminal units 20 (S1011). The search request A1011 is sent to plural mobile terminal units 20₁ to 20ₘ. Upon receiving the search request A1011, the mobile terminal unit 20₁ performs an operation for obtaining sensor information (S2011). Terminal information A2011 about the terminal device 10₁ itself and sensor information A2012 obtained at the step S2011 is sent to the terminal device 10₁. The mobile terminal unit 20ₘ other than the mobile terminal unit 20₁ also sends terminal information A20ml and sensor information A20m0 to the terminal device 10₁. Since the mobile terminal unit 20ₘ obtains no sensor information, the sensor information A20m0 is empty. The display portion 102 of the terminal device 10₁ displays the results of the searches for the mobile terminal units 20 (S1012). At this time, the sensor information A2012 is included in the terminal information A2011 sent from the mobile terminal units 20₁ and displayed. If the sensor information A2012 represents a condition in which vibrations are occurring, the terminal information A2011 may be displayed on the display portion 102 of the terminal device 10₁ while being vibrated. Then, the terminal information A2011 displayed together with the sensor information A2012 is selected (S1013). If no selection is performed (S1014), the process returns to the step S1011 for searching for mobile terminal units. If the decision at the step S1013 for selecting a paired terminal is that the mobile terminal unit 20₁ is selected, the pairing operation portion 104 of the terminal device 10₁ performs a pairing operation (S1015), and sends a pairing request A1012 to the selected mobile terminal unit 20₁. The pairing operation portion 204 of the mobile terminal unit 20₁ performs a pairing operation (S2012), creates pairing information, and stores the information in the pairing information storage portion 205 of the mobile terminal unit 20₁ (S2013). Then, a pairing response A2013 including the created pairing information is sent back to the mobile terminal unit 10₁. The terminal device 10₁ stores the pairing information contained in the received pairing response A2013 into the pairing information storage portion 105 (S1016). Then, arbitrary data A2014 is sent and received between the terminal device 10₁ and the mobile terminal unit 20₁.

Then, the terminal device 10ₙ makes a search request for searching for mobile terminal units 20 (S10n1). The search request A10n1 is sent to the plural mobile terminal units 20₁ to 20ₘ. The mobile terminal units 20ₘ receiving the search request A10n1 performs an operation for obtaining sensor information (S20m1) and sends terminal information A20m1 about the terminal device 10ₙ itself and sensor information A20m2 obtained at the step S20m1 to the terminal device 10ₙ. The mobile terminal unit 20₁ other than the mobile terminal unit 20ₘ also sends terminal information A2011 and sensor information A2010 to the terminal device 10ₙ. Since the mobile terminal unit 20₁ has obtained no sensor information, the sensor information A2010 is empty. The results of the searches for the mobile terminal unit 20 are displayed on the display portion 102 of the terminal device 10ₙ (S10n2). At this time, the sensor information A20m2 is included in the terminal information A20m1 sent from the mobile terminal units 20 and displayed. If the sensor information A20m2 indicates that the unit is vibrating, the terminal information A20m1 may be displayed on the display portion 102 of the terminal unit 10ₙ while being displayed. Then, the terminal information A20m1 displayed along with the sensor information A20m2 is selected (S10n3). If no selection is performed (S10n4), the process goes back to the aforementioned step S10n1 for searching for mobile terminal units. If the result of the operation of the step S10n3 for selecting a paired terminal is that the mobile terminal unit 20ₘ is selected as a paired one, the pairing operation portion 104 of the terminal unit 10ₙ performs a pairing operation (S10n5) and sends a pairing request A 10n2 to the selected mobile terminal unit 20ₘ. The pairing operation portion 204 of the mobile terminal unit 20ₘ performs a pairing operation (S20m2), generates pairing information, and stores the information in the pairing information storage portion 205 of the mobile terminal unit 20ₘ (S20m3). Then, the pairing operation portion sends a pairing response A20m3 including the generated pairing information back to the terminal device 10ₙ. The terminal device 10ₙ stores the pairing information contained in the received pairing response A20m3 into the pairing information storage portion 105 (S10n6). Then, arbitrary data A10n3 is sent and received between the terminal device 10ₙ and the mobile terminal unit 20ₘ.

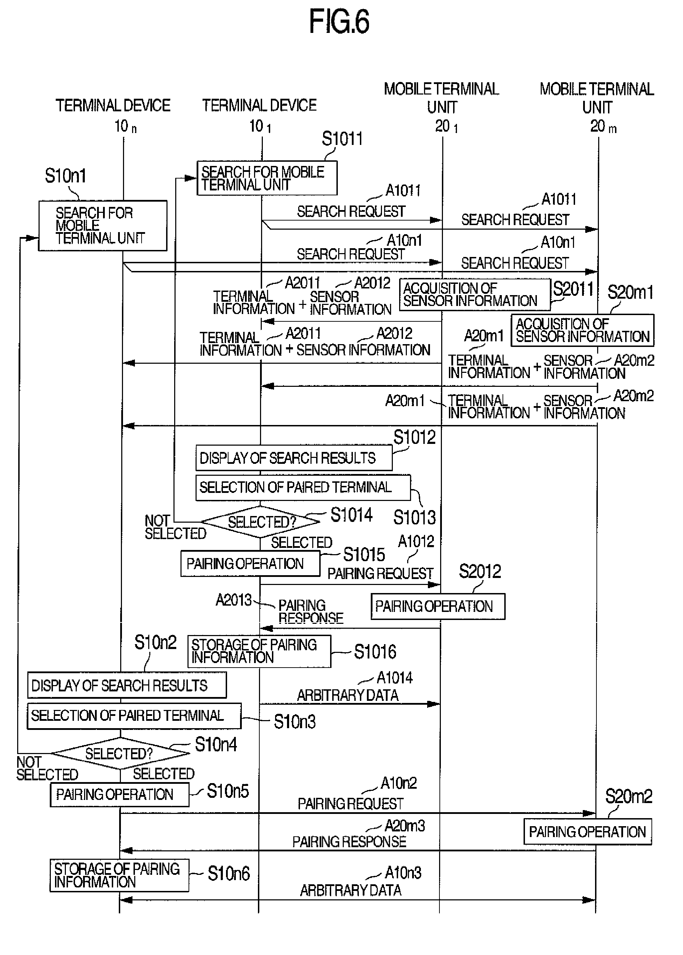

FIG. 6 is a flowchart illustrating a sequence of operations performed to pair plural terminal devices 10 with plural terminal units 20. The difference between FIGS. 6 and 5 is that FIG. 6 illustrates operations performed when the plural mobile terminal units 20 respond to a search request from the terminal devices 10 when a pairing operation is performed.

First, the terminal device 10₁ makes a search request to search for mobile terminal units 20 (S1011). The search request A1011 is sent to the plural mobile terminal units 20₁ to 20ₘ. Then, the terminal unit 10ₙ makes a search request to search for the mobile terminal units 20 (S10n1). The search request A10n1 is sent to the plural mobile terminal units 20₁ to 20ₘ.

The mobile terminal unit 20₁ receiving the search request A1011 and search request A10n1 performs an operation for obtaining sensor information (S2011), and sends terminal information A2011 about the terminal unit itself and sensor information A2012 obtained at the step S2011 to the terminal device 10₁ and to the terminal unit 10ₙ. Furthermore, the mobile terminal unit 20ₘ receiving the search request A 1011 and search request A10n1 performs an operation for obtaining sensor information (S20m1), and sends terminal information A20m1 about the terminal unit itself and the sensor information A20m2 obtained at the step S20m1 to the terminal devices 10₁ and 10ₙ.

The results of the searches for the mobile terminal units 20 are displayed on the display portion 102 of the terminal device 10₁. At this time, the sensor information A2012 is included in the terminal information A2011 sent from the mobile terminal unit 20₁ and displayed. Furthermore, the sensor information A20m2 is included in the terminal information A20m1 sent from the mobile terminal unit 20ₘ and displayed (S1012).

Then, the terminal information A2011 displayed along with the sensor information A2012 is selected (S1013). If no selection is made at this time, the process goes back to the aforementioned step S1011 for searching for a mobile terminal unit. If the result of the step S1013 for selecting a paired terminal is that the mobile terminal unit 20₁ is selected (S1014), the pairing operation portion 104 of the terminal device 10₁ performs a pairing operation (S1015), and sends a pairing requestA1012 to the selected mobile terminal unit 20₁. The pairing operation portion 204 of the mobile terminal unit 20₁ performs a pairing operation (S2012) and stores the pairing information in the pairing information storage portion 205 of the mobile terminal unit 20₁ (S2013). Then, the pairing operation portion sends a pairing response A2013 containing the generated pairing information to the terminal device 10₁. The terminal device 10₁ stores the pairing information contained in the received pairing response A2013 into the pairing information storage portion 105 (S1016). Arbitrary data A1014 is then sent and received between the terminal device 10₁ and the mobile terminal unit 20₁.

The results of the searches for the mobile terminal units 20 are displayed on the display portion 102 of the terminal device 10ₙ (S10n2). At this time, the sensor information A20m2 is included in the terminal information A20m1 sent from the mobile terminal unit 20ₘ and displayed. Furthermore, the sensor information A2012 is included in the terminal information A2011 sent from the mobile terminal unit 20₁ and displayed.

Then, the terminal information A20m1 displayed together with the sensor information A20m2 is selected (S10n3). If no selection is made at this time (S10n4), the process returns to the above-described step S10n1 for searching for a mobile terminal unit. If the result of the operation of the step S10n3 for selecting a paired terminal is that the mobile terminal unit 20ₘ is selected as a paired unit, the pairing operation portion 104 of the terminal device 10ₙ performs a pairing operation (S10n5). A pairing request A10n2 is sent to the selected mobile terminal unit 20ₘ. The pairing operation portion 204 of the mobile terminal unit 20ₘ executes a pairing operation (S20m2) and stores pairing information in the pairing information storage portion 205 of the mobile terminal unit 20ₘ (S20m3). Then, the pairing operation portion sends a pairing response A20m3 containing the generated pairing information back to the terminal device 10ₙ. The terminal device 10ₙ stores the pairing information contained in the received pairing response A20m3 into the pairing information storage portion 105 (S10n6). Then, arbitrary data A10n3 is sent and received between the terminal device 10ₙ and the mobile terminal unit 20ₘ.

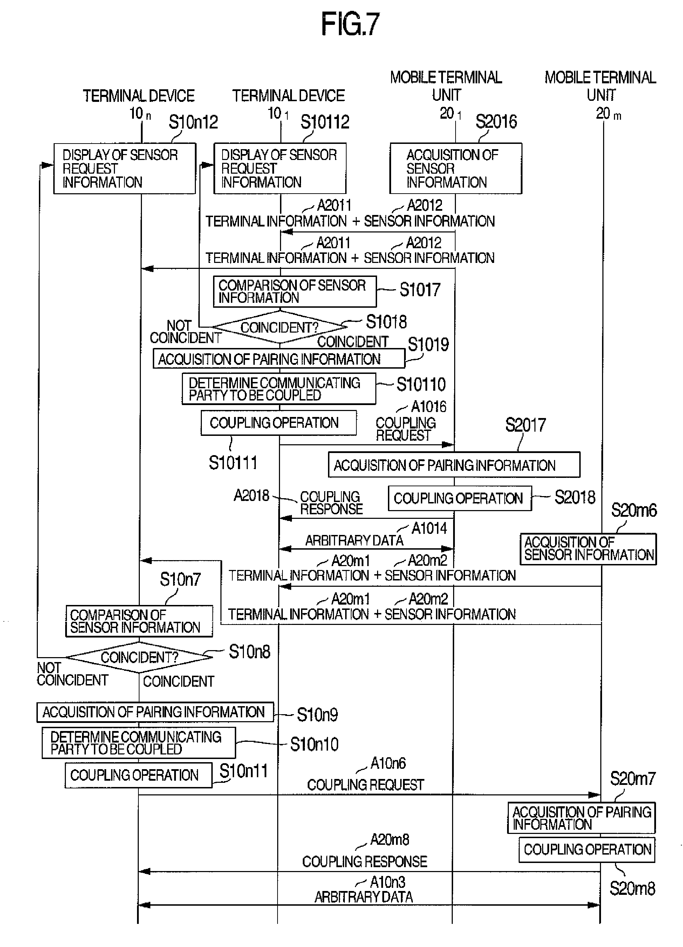

FIG. 7 is a flowchart illustrating a sequence of operations performed when the plural terminal devices 10 and the plural mobile terminal units 20 are recoupled. In particular, FIG. 7 is a flowchart illustrating operations performed when a single mobile terminal unit 20 responds to a search request from any one of the terminal devices 10 when recoupling is done.

First, the terminal device 10₁ displays sensor request information (S10112). Also, the terminal device 10ₙ displays the sensor request information (S10n12). The mobile terminal unit 20₁ obtains sensor information obeying the sensor request information displayed on the terminal device 10₁ (S2016).

The mobile terminal unit 20₁ sends the terminal information A2011 about the terminal device itself and the sensor information A2012 obtained at the step S2016 to the terminal device 10₁. Furthermore, the mobile terminal unit 20₁ sends the terminal information A2011 about the terminal unit itself and the sensor information A2012 acquired at the step S2016 to the terminal device 10ₙ.

The terminal device 10₁ compares the sensor request information displayed by this device itself at the step S10112 and the sensor information A2012 received from the mobile terminal unit 20₁ (S1017). If the result of the comparison indicates that there is no coincidence (S1018), the process is repeated from the step S10112 for displaying sensor request information. If there is an agreement, pairing information stored at the step S1016 for storing pairing information is obtained (S1019). A communicating party to be coupled is determined (S10110). The coupling operation portion 103 of the terminal device 10₁ performs an operation for coupling (S10111) and sends a coupling request A 1016 to the mobile terminal unit 20₁. The coupling operation portion 203 of the mobile terminal unit 20₁ obtains pairing information from the pairing information storage portion 205 (S2017), performs an operation for coupling (S2018), and sends the coupling response A2018 to the terminal device 10₁. Then, arbitrary data A1014 is sent and received between the terminal device 10₁ and the mobile terminal unit 20₁.

The mobile terminal unit 20ₘ obtains sensor information obeying the sensor request information displayed on the terminal device 10ₙ (S20m6).

The mobile terminal unit 20ₘ sends the terminal information A20m1 about the device itself and the sensor information A20m2 obtained at the step S20m6 to the terminal device 10₁. The mobile terminal unit 20ₘ sends the terminal information A20m1 about the unit itself and the sensor information A20m2 obtained at the step S20m6 to the terminal device 10ₙ.

The terminal device 10ₙ compares the sensor request information displayed by the device itself at the step S10n12 and the sensor information A20m2 received from the mobile terminal unit 20ₘ (S10n7). If the result of the comparison indicates that there is no coincidence, the process is repeated from the step S10n12 for displaying sensor request information. If the result of the comparison is that there is a coincidence, the pairing information stored at the step S10n6 for storing pairing information is obtained (S10n9) and a communicating party to be coupled is determined (S10n10). The coupling operation portion 103 of the terminal device 10ₙ performs a coupling operation (S10n11) and sends a coupling request A10n6 to the mobile terminal unit 20ₘ. The coupling operation portion 203 of the mobile terminal unit 20ₘ obtains pairing information from the pairing information storage portion 205 (S20m7), performs a coupling operation (S20m8), and sends a coupling response A20m8 to the terminal device 10ₙ. Then, arbitrary data A10n3 is sent and received between the terminal device 10ₙ and the mobile terminal unit 20ₘ.

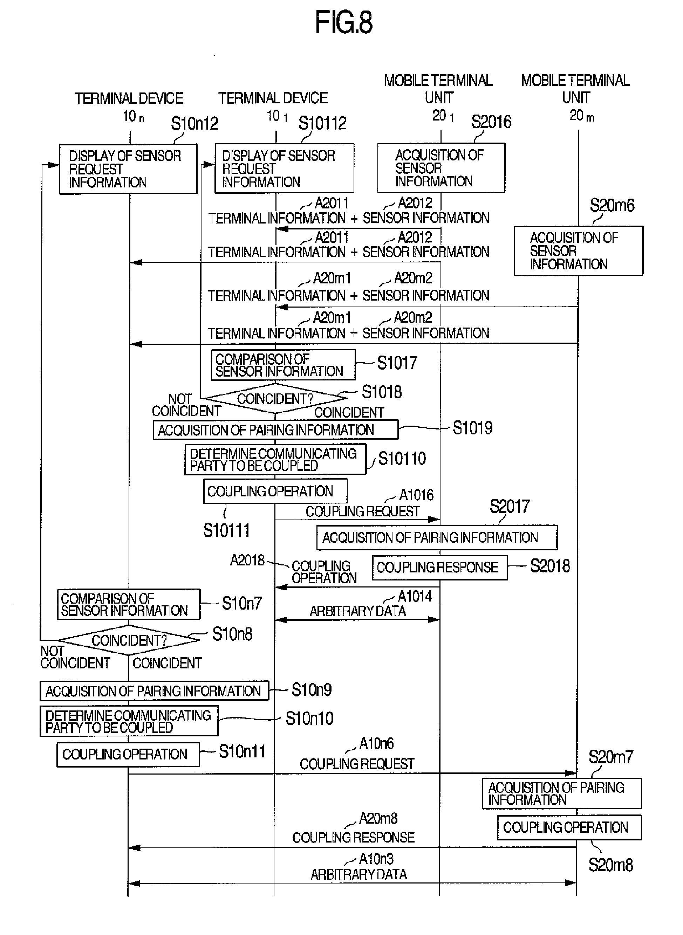

FIG. 8 is a flowchart illustrating operations performed when the plural terminal devices 10 and the plural mobile terminal units 20 are recoupled. The difference between FIGS. 8 and 7 is that FIG. 8 is a flowchart illustrating operations performed when plural mobile terminal units 20 respond to a search request from any one of the terminal devices 10 when the recoupling is done.

First, the terminal device 10₁ displays sensor request information (S10112). The terminal device 10ₙ also displays the sensor request information (S10n12).

The mobile terminal unit 20₁ acquires sensor information according to the sensor request information displayed on the terminal device 10₁ (S2016). The mobile terminal unit 20₁ sends terminal information A2011 about the device itself and the sensor information A2012 obtained at the step S2016 to the terminal device 10₁. The mobile terminal unit 20₁ sends terminal information A2011 about the unit itself and the sensor information A2012 obtained at the step S2016 to the terminal device 10ₙ.

The mobile terminal unit 20ₘ obtains sensor information obeying the sensor request information displayed on the terminal device 10ₙ (S20m6). The mobile terminal unit 20ₘ sends terminal information A20m1 about the unit itself and the sensor information A20m2 obtained at the step S20m6 to the terminal device 10₁. Furthermore, the mobile terminal unit 20ₘ sends the terminal information A20m1 about the unit itself and the sensor information A20m2 obtained at the step S20m6 to the terminal device 10ₙ.

The terminal device 10₁ compares the sensor request information displayed by the device itself at the step S10112 and the sensor information A2012 received from the mobile terminal unit 20₁ (S1017). If the result of the comparison is that there is no coincidence (S1018), the process is repeated from the step S10112 for displaying sensor request information. If the result of the comparison is that there is a coincidence, the pairing information stored at the step S1016 for storing pairing information is obtained (S1019) and a communicating party to be coupled is determined (S10110). The coupling operation portion 103 of the terminal device 10₁ performs a coupling operation (S10111) and sends a coupling requestA1016 to the mobile terminal unit 20₁. The coupling operation portion 203 of the mobile terminal unit 20₁ obtains pairing information from the pairing information storage portion 205 (S2017), performs a coupling operation (S2018), and sends the coupling response A2018 to the terminal device 10₁. Then, arbitrary data A1014 is sent and received between the terminal device 10₁ and the mobile terminal unit 20₁.

The terminal device 10ₙ compares the sensor request information displayed by the device itself at the step S10n12 and the sensor information A20m2 received from the mobile terminal unit 20m (S10n7). If the result of the comparison indicates that there is no coincidence, the process is repeated from step S10n12 for displaying sensor request information. If the result of the comparison indicates that there is a coincidence (S10n8), the pairing information stored at the step S10n6 for storing pairing information is obtained (S10n9) and a communicating party to be coupled is determined (S10n10). The coupling operation portion 103 of the terminal device 10ₙ performs a coupling operation (S10n11) and sends the coupling request A10n6 to the mobile terminal unit 20ₘ. The coupling operation portion 203 of the mobile terminal unit 20ₘ obtains pairing information from the pairing information storage portion 205 (S20m7), performs a coupling operation (S20m8), and sends a coupling response A20m8 to the terminal device 10ₙ. Then, arbitrary data A10n3 is sent and received between the terminal device 10ₙ and the mobile terminal unit 20ₘ.

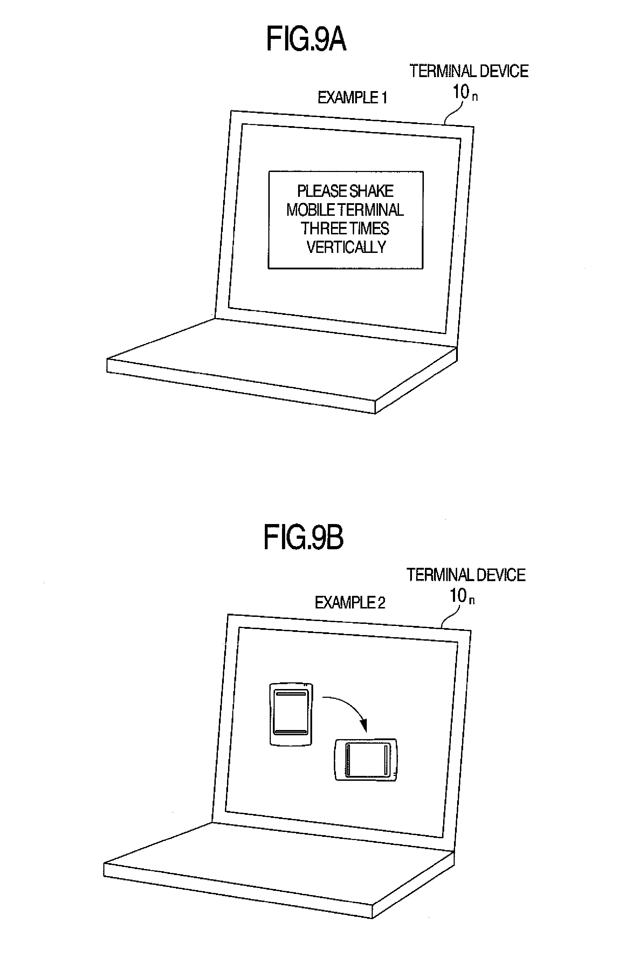

FIGS. 9A and 9B show examples of the display of sensor request information provided as shown in FIGS. 7 and 8.

For example, the manner in which each mobile terminal unit 20 is vibrated may be represented by characters on the display portion of the terminal device 10ₙ as shown in example 1. Furthermore, as shown in example 2, the sense of the mobile terminal unit 20 may be shown to be tilted in a predetermined direction.

It is to be understood that the sensor request information is not restricted to this. Other types of sensor information such as obtained from an accelerator sensor, a microphone (voice), a camera (photographs), or GPS (positions) may also be requested. Graphical figures such as triangles or circles may also be drawn. An input from a keyboard or a touch pad may also be requested.

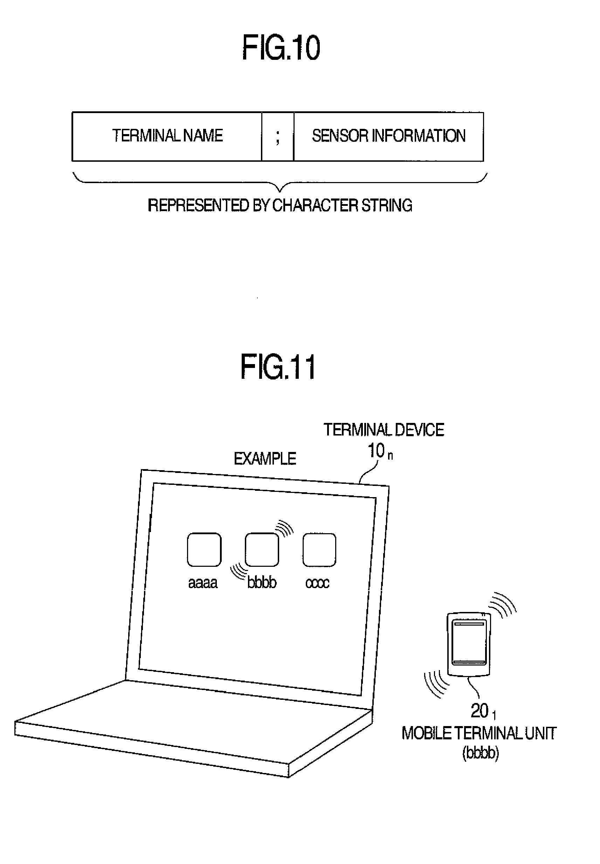

FIG. 10 shows an example of data structure of terminal information and sensor information. As shown, terminal information and sensor information sent from the mobile terminal units 20 to the terminal devices 10 assumes a data structure in which a terminal name is partitioned from sensor information converted into a character string by a semicolon. Consequently, all information can be treated as strings of characters. Hence, the information can be directly applied to existing communication specifications.

FIG. 11 shows one example of the display screen of the terminal device 10ₙ after a search for the mobile terminal unit 20₁. Information about the mobile terminal unit 20₁ searched for may be displayed either as icons or in tabular form. Furthermore, under conditions where sensor information about the mobile terminal unit 20₁ indicates vibrations, an icon indicative of the corresponding mobile terminal unit which is displayed on the display portion 102 of the terminal device 10ₙ may be vibrated.

### [Embodiment 2]

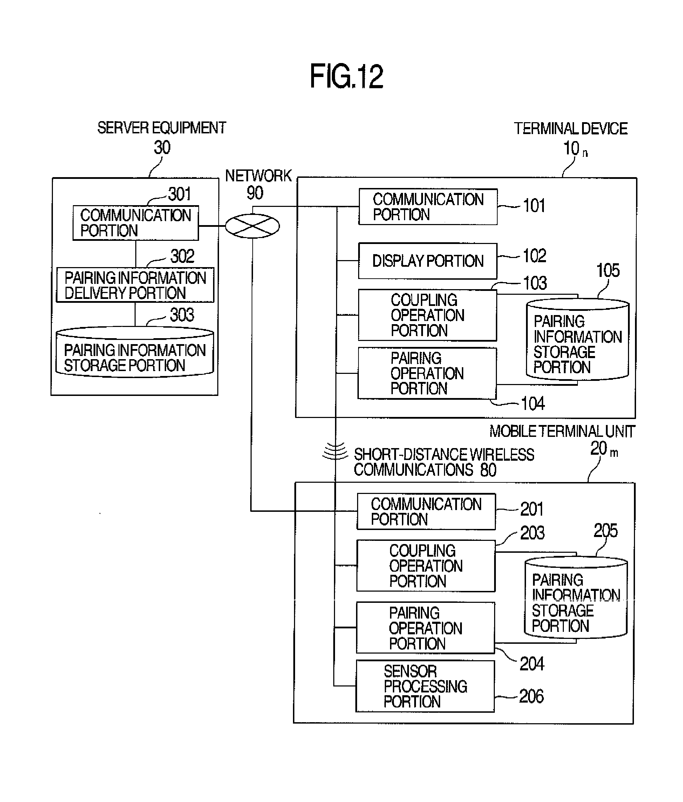

FIG. 12 is a block diagram of a terminal coordination system of embodiment 2. In the terminal coordination system of the present embodiment, a terminal device 10ₙ and a mobile terminal unit 20ₘ are coupled to each other via short-distance wireless communications 80. Also, the terminal device 10ₙ and the mobile terminal unit 20ₘ are coupled to server equipment 30 via a network 90.

The server equipment 30 includes a communication portion 301 for sending and receiving data to and from the terminal device 10ₙ and mobile terminal unit 20ₘ via the network 90, a pairing information storage portion 303 for storing pairing information after the terminal device 10ₙ and the mobile terminal unit 20ₘ are paired together, and a pairing information delivery portion 302 for sending the pairing information at a request from the terminal device 10ₙ or the mobile terminal unit 20ₘ.

The terminal device 10ₙ and the mobile terminal unit 20ₘ are similar in configuration with their counterparts of embodiment 1.

In embodiment 1, in the steps S1016, S10n6, S2013, and S20m3 illustrated in FIGS. 5 and 6 for storing pairing information, pairing information is stored in their respective pairing information storage portions 105 and 205. In contrast, in embodiment 2, pairing information is stored in the pairing information storage portion 303 of the server equipment coupled via the network 90.

Furthermore, in the steps S1019, S10n9, S2017, and S20m7 of embodiment 1 illustrated in FIGS. 7 and 8 for obtaining pairing information, pairing information is obtained from their respective pairing information storage portions 105 and 205. In contrast, in embodiment 2, pairing information is obtained from the pairing information storage portion 303 of the server equipment 30 coupled via the network 90.

In the step S1013 of FIGS. 5 and 6 for selecting a terminal to be paired, if a mobile terminal unit already paired is selected, an error message may be displayed and the pairing operation may be interrupted.

Immediately prior to the pairing operation (S2012) of FIGS. 5 and 6 performed by mobile terminal units, the user of each mobile terminal unit 20 may be asked to make a check. Alternatively, the user may be asked to make an input of secret information such as a password, and the input may be confirmed.

Furthermore, immediately prior to the coupling operation (S2018) of FIGS. 7 and 8 performed by mobile terminal units, the user of each mobile terminal unit 20 may be required to make a check. Alternatively, the user may be required to make an input of secret information such as a password, and the input may be confirmed.

In FIGS. 5 and 6, each mobile terminal unit 20 sends terminal information and sensor information in response to a search request from any one of the terminal devices 10. Subsequently to the pairing operations (S2012 and S20m2) performed by mobile terminal units, any reply may not be made in response to a search request from any terminal device 10. Also, after vibrating the mobile terminal unit 20, a reply to a search request from any terminal device 10 may be made.

In FIGS. 7 and 8, each mobile terminal unit 20 obtains sensor information (S2016 and S20m6) and sends terminal information and sensor information to the terminal devices 10. Subsequently to the coupling operations S2018 and S20m8 performed by the mobile terminal units, transmission of terminal information and sensor information to the terminal units 10 may be inhibited. Furthermore, after vibrating the mobile terminal unit 20 of interest, terminal information and sensor information may be sent to the terminal devices 10.

It should be further understood by those skilled in the art that although the present description has been made on example embodiments, various changes and modifications may be made without departing from the spirit and scope of the claimed subject matter.

Although the present disclosure has been described with reference to example embodiments, those skilled in the art will recognize that various changes and modifications may be made in form and detail without departing from the spirit and scope of the claimed subject matter.

## Claims

1. A terminal coordinating method for forming one pair of a terminal device and a mobile terminal unit from plural terminal devices (10₁, 10₂, ..., 10ₙ) and plural mobile terminal units (20₁, 20₂, ..., 20ₘ) which can be paired together in various combinations and sending and receiving data between the terminal device and mobile terminal unit of the formed pair, the method comprising the steps of:
paring together the terminal device (10₁) and the mobile terminal unit (20₁) such that a key is shared between these device and unit (SS101);
performing a login to an OS (Operating System) of the terminal device (10₁) using the shared key (SS1041);
then decoupling the terminal device and the mobile terminal unit from each other (SS106);
performing a logout from the OS of the terminal device (SS1071);
recoupling together the terminal device and the mobile terminal unit of the pair which were paired together at least once (SS108);
coupling together one terminal device and one mobile terminal unit (SS108) which were paired together once and performing a logout from the OS of the terminal device using the key shared in the pairing when data is sent and received between these terminal device and mobile terminal unit (SS109); and
discarding the shared key when the record of the pairing between the terminal device and the mobile terminal unit which were paired together once should be erased (SS1131, SS1132).

2. The terminal coordinating method according to Claim 1,
wherein during the pairing step (SS101), a first one (10₁) of the terminal devices sends a search request (A1011) to plural mobile terminal units (20₁, 20ₘ), each mobile terminal unit receiving the search request performs an operation (S2011, S20m1) for obtaining sensor information, and sends terminal information (A2011, A20m1) about the terminal itself and the sensor information (A2012, A20m0) to the first terminal device (10₁), the first terminal device (10₁) displays mobile terminal information about the plural mobile terminal units and sensor information, accepts an operation (S1013) performed by a user to select a mobile terminal unit according to the displayed information,
wherein if the operation to select a mobile terminal unit is not performed (S1014), the process goes to the aforementioned step (S1011) for searching for a mobile terminal unit, and
wherein if the operation to select a mobile terminal unit is performed, the first terminal device is paired with the selected mobile terminal unit (S1015), and sends a pairing request (A1012) to the selected mobile terminal unit, the selected mobile terminal unit (20₁) is paired with the first terminal device according to the received pairing request (S2012), stores generated pairing information in the mobile terminal unit itself (S2013), and sends back the generated pairing information to the first terminal device (10₁) (A2013), the first terminal device (10₁) stores the sent pairing information (S1016), and the first terminal device and the selected mobile terminal unit send and receive data to and from each other (A2014).

3. The terminal coordinating method according to Claim 2, wherein, if the sensor information indicates vibrations, a display portion of the first terminal device displays an icon depicting the mobile terminal unit while vibrating the icon when the sensor information is displayed.

4. The terminal coordinating method according to Claim 2 or Claim 3,
wherein during an operation (SS108) for recoupling the first terminal device (10₁) and the mobile terminal unit (20₁) which were paired together at least once, the first terminal device (10₁) displays sensor request information (S10112), the mobile terminal unit (20₁) obtains sensor information responsive to a user's manipulation according to the sensor request information displayed on the first terminal device (S2016), and sends terminal information (A2011) about the first terminal device itself and the sensor information (A2012) to the first terminal device, the first terminal device (10₁) compares the displayed sensor request information and the sensor information received from the mobile terminal unit (S1017),
wherein if the compared pieces of information are not coincident (S1018), the process is repeated from the operation (S10112) of displaying the sensor request information, and
wherein if the compared pieces of information are coincident (S1018), stored pairing information is obtained (S1019), a communicating party to be coupled is determined as the mobile terminal unit (S10110), a coupling request is sent to the mobile terminal unit (A1016), the mobile terminal unit (20₁) obtains the stored pairing information (S2017) and sends a coupling response (A2018) to the first terminal device, and the first terminal device and the mobile terminal unit send and receive data to and from each other (A1014).

5. The terminal coordinating method according to Claim 4, wherein the sensor request information displayed on the terminal device instructs the mobile terminal unit to operate.

6. The terminal coordinating method according to any one of Claims 1 to 5, wherein each piece of information of terminal information and sensor information sent from the mobile terminal units to the terminal devices includes a character string in which a character substring indicating terminal information and a character substring indicating sensor information are concatenated together by a character substring indicating a delimiter.

7. The terminal coordinating method according to any one of Claims 1 to 6, wherein during the operation for storing pairing information, the first terminal device and the mobile terminal unit send the pairing information about each terminal itself to server equipment (30) coupled via a network (90), and wherein during the operation for obtaining pairing information, the first terminal device and the mobile terminal unit obtain the pairing information about each terminal itself from the server equipment.

8. The terminal coordinating method according to any one of Claims 1 to 7, wherein if a mobile terminal unit which has been paired is selected during the operation for selection, the first terminal device displays an error message and interrupts the pairing operation.

9. The terminal coordinating method according to Claims 1 to 8, wherein the mobile terminal units ask users to make a check or enter secret information after the pairing request is received or after the coupling request is received.

10. The terminal coordinating method according to any one of Claims 1 to 9, wherein the mobile terminal units do not respond to the search request after paired with the first terminal device or after the coupling operation is complete.

11. The terminal coordinating method according to any one of Claim 1 to 10, wherein each of the mobile terminal units vibrates itself when the mobile terminal information and the sensor information is sent.

12. A terminal coordination system in which a terminal device (10ₙ) and a mobile terminal unit (20ₘ) are coupled together via wireless communications (80),
wherein the terminal device (10ₙ) has a communication portion (101) for sending and receiving data to and from the mobile terminal unit (20ₘ) via the wireless communications (80), a display portion (102) for displaying information about the mobile terminal unit searched for, a pairing operation portion (104) for pairing this terminal device (10ₙ) with the mobile terminal unit (20ₘ) such that a key is shared between them, a coupling operation portion (103) for performing recoupling using the shared key after the pairing, and a pairing information storage portion (105) for storing pairing information used by both the pairing operation portion (104) and the coupling operation portion (103), and
wherein the mobile terminal unit (20ₘ) has a communication portion (201) for sending and receiving data to and from the terminal device (10ₙ) via the wireless communications (80), a pairing operation portion (204) for pairing this mobile terminal unit (20ₘ) with the terminal device (10ₙ), a coupling operation portion (203) for performing recoupling using the shared key after the pairing, a pairing information storage portion (205) for storing pairing information used by both the pairing operation portion (204) and the coupling operation portion (203), and a sensor processing portion (206) for obtaining sensor information from a sensor device.

13. The terminal coordination system according to Claim 12, wherein there is further provided server equipment (30), and wherein the server equipment (30) has a communication portion (301) for performing communications with the terminal device (10ₙ) and with the mobile terminal unit (20ₘ) via the network (90), a pairing information storage portion (303) for receiving the pairing information generated by the pairing between the terminal device and the mobile terminal unit from these device and unit and storing the received pairing information, and a pairing information delivery portion (302) for obtaining the stored pairing information and sending the obtained pairing information to the terminal device and the mobile terminal unit according to requests from the terminal device and the mobile terminal unit.
